# FASCICULE DE BREVET EUROPEEN

(11) **EP 1 752 490 B1**
(45) Date de publication et mention de la délivrance du brevet: **18.06.2008**
(21) Numéro de dépôt: 06300754.6
(22) Date de dépôt: 04.07.2006
(51) Int. Cl.: C08K 3/22, H01B 7/295, C09K 21/02

(54) **Composition résistante au feu notamment pour matériau de câble d'énergie et/ou de télécommunication**
Flammwidrige Zusammensetzung insbesondere für Energie- und/oder Telekommunikationskabel Material
Flame resistant composition especially for power and/or telecommunication cable material

(30) Priorité: 08.08.2005 FR 0552461
(43) Date de publication de la demande: 14.02.2007
(73) Titulaire: Nexans, 75008 Paris (FR)
(72) Inventeur: FOURNIER, Jérôme, 69006, LYON (FR); PIECHACZYK, Arnaud, 69006, LYON (FR); LOPEZ-CUESTA, José-Marie, 30380, ST CHRISTOL DES ALES (FR); TAVARD, Elisabeth, 69009, LYON (FR); LAOUTID, Fouad, 30100, ALES (FR); LEROY, Eric, 30100, ALES (FR)
(74) Mandataire: Feray, Valérie

(56) Documents cités:
- EP-A- 0 906 933
- EP-A- 1 555 286
- WO-A-20/04074361
- GB-A- 2 231 333
- US-A- 4 251 430
- US-A- 4 731 406

## Description

La présente invention concerne une composition pour un matériau capable de résister à des conditions thermiques extrêmes.

L'invention trouve une application particulièrement avantageuse, mais non exclusive, dans le domaine des câbles d'énergie et/ou de télécommunication qui sont destinés à rester opérationnels pendant un temps défini lorsqu'ils sont soumis à de fortes chaleurs et/ou directement à des flammes.

Aujourd'hui, un des enjeux majeurs de l'industrie du câble est l'amélioration du comportement et des performances des câbles dans des conditions thermiques extrêmes, notamment celles rencontrées lors d'un incendie. Pour des raisons essentiellement de sécurité, il est en effet indispensable de maximiser les capacités du câble à retarder la propagation des flammes d'une part, et à résister au feu d'autre part. Un ralentissement significatif de la progression des flammes, c'est autant de temps gagné pour évacuer les lieux et/ou pour mettre en oeuvre des moyens d'extinction appropriés. Une meilleure résistance au feu offre au câble la possibilité de fonctionner plus longtemps, sa dégradation étant moins rapide.

Qu'il soit électrique ou optique, destiné au transport d'énergie ou à la transmission de données, un câble est schématiquement constitué d'au moins un élément conducteur s'étendant à l'intérieur d'au moins un élément isolant. Il est à noter qu'au moins un des éléments isolants peut également jouer le rôle de moyen de protection et/ou que le câble peut comporter en outre au moins un élément de protection spécifique, formant une gaine. Or il est connu que parmi les meilleurs matériaux isolants et/ou de protection utilisés dans la câblerie, nombre d'entre eux sont malheureusement aussi des matières fortement inflammables. C'est notamment le cas des polyoléfines et de leurs copolymères, comme par exemple le polyéthylène, le polypropylène, les copolymères d'éthylène et d'acétate de vinyle, les copolymères d'éthylène et de propylène. Quoi qu'il en soit, dans la pratique, cette inflammabilité excessive s'avère totalement incompatible avec les impératifs de tenue au feu précédemment évoqués.

Dans le domaine de la câblerie, il existe de nombreuses méthodes pour améliorer le comportement au feu des polymères employés comme matériaux d'isolation et/ou de gainage.

La solution la plus répandue jusqu'à maintenant a consisté à employer des composés halogénés, sous forme d'un sous-produit halogéné dispersé dans une matrice polymère, ou directement sous forme d'un polymère halogéné comme dans le cas d'un PVC par exemple. Cependant, les réglementations actuelles tendent désormais à interdire l'utilisation de ce type de substances en raison essentiellement de leur toxicité et de leur corrosivité potentielles, que ce soit au moment de la fabrication du matériau, ou lors de sa décomposition par le feu. Ceci est d'autant plus vrai que la décomposition en question peut intervenir accidentellement lors d'un incendie, mais également volontairement au cours d'une incinération. Quoi qu'il en soit, le recyclage des matériaux halogénés demeure toujours particulièrement problématique.

C'est pourquoi on a de plus en plus recours à des charges ignifugeantes non halogénées, et notamment aux hydroxydes métalliques tels que l'hydroxyde d'aluminium ou l'hydroxyde de magnésium. Ce type de solutions techniques présente toutefois l'inconvénient de nécessiter de grandes quantités de charges pour atteindre un niveau d'efficacité satisfaisant, que ce soit en terme de capacité à retarder la propagation des flammes, que de résistance au feu. A titre d'exemple, la teneur en hydroxydes métalliques peut atteindre typiquement 100 à 150 parties en poids pour 100 parties en poids de résine polymère.

Or toute incorporation massive de charge induit une augmentation considérable de la viscosité du matériau composite. Cela génère alors inévitablement une diminution notable de la vitesse d'extrusion, et conséquemment une baisse significative de productivité. Au final, cela va impacter négativement le coût du matériau composite, qui est déjà largement grevé par le prix de revient intrinsèquement élevé de la charge ignifugeante non halogénée, et ce d'autant plus que ladite charge doit être utilisée en quantité importante.

Mais indépendamment de cet aspect purement économique, les performances de tenue au feu des matériaux dotés de charges ignifugeantes non halogénées demeurent aujourd'hui de toute façon toujours insuffisantes pour satisfaire toutes les conditions des tests au feu.

Les phyllosilicates sont également connus pour être utilisables en tant que charges ignifugeantes non halogénées. Ces composés inorganiques sont remarquables en ce qu'ils peuvent former des nanocomposites avec les matrices polymères dans lesquelles ils sont dispersés.

Ce type de solution présente toutefois l'inconvénient d'être particulièrement onéreuse, en raison essentiellement du coût de l'indispensable traitement préalable que doit subir chaque phyllosilicate pour pouvoir disposer d'un caractère suffisamment organophile. De tels matériaux composites disposent par ailleurs de propriétés électriques médiocres, d'une viscosité pénalisante pour les vitesses d'extrusion, ainsi que d'une tenue au feu qui est quoi qu'il en soit toujours insuffisante.

Aussi, le problème technique à résoudre par l'objet de la présente invention, est de proposer une composition résistante au feu notamment pour un matériau de câble d'énergie et/ou de télécommunication, composition qui permettrait d'éviter les problèmes de l'état de la technique en étant peu onéreuse, tout en offrant des propriétés de tenue au feu sensiblement améliorées.

La solution au problème technique posé consiste, selon la présente invention, en ce que la composition comporte un polymère ainsi que de l'oxyde d'aluminium sous forme de particules dont le diamètre moyen est inférieur au micromètre.

On entend par oxyde d'aluminium de l'alumine, non hydratée, de formule Al₂O₃.

En d'autres termes, une composition conforme à l'invention comprend une matrice polymère dans laquelle est dispersée de l'alumine submicronique jouant le rôle de charge ignifugeante.

Il est à noter que la locution "composition résistante au feu" désigne ici très généralement toute composition destinée à constituer un matériau capable de retarder la propagation d'un feu et/ou de résister à un feu.

Quoi qu'il en soit, la taille moyenne des particules d'oxyde d'aluminium constitue le paramètre essentiel de l'invention, en ce sens que la tenue au feu du matériau polymère est directement liée à la granulométrie de la charge ignifugeante. Un effet ignifugeant particulièrement prononcé est en effet observé dès lors que l'alumine utilisée présente une très fine granulométrie, et notamment quand le diamètre moyen des particules qui la compose est inférieur au micron. On note par ailleurs que plus la taille des particules d'oxyde d'aluminium est faible, plus l'effet ignifugeant est remarquable.

L'invention telle qu'ainsi définie présente l'avantage de pouvoir disposer d'un matériau polymère bénéficiant d'une tenue au feu améliorée ainsi que de bonnes propriétés mécaniques, par rapport à ses homologues de l'état de la technique. Un tel matériau est de ce fait parfaitement adapté pour être utilisé dans la réalisation de gaines de câbles d'énergie et/ou de télécommunication. On pense ici aussi bien à un revêtement isolant, qu'à une gaine de protection ou à une couche de matériau de bourrage.

Conformément à un mode de réalisation actuellement préféré de l'invention, l'oxyde d'aluminium est composé de particules présentant un diamètre moyen inférieur à 20 nanomètres.

De manière particulièrement avantageuse, la composition comporte entre 1 et 80% en masse d'oxyde d'aluminium, et de préférence entre 2 et 20%.

Selon une particularité de l'invention, le polymère est choisi parmi un polyéthylène, un polypropylène, un copolymère d'éthylène et de propylène (EPR), un terpolymère-éthylène-propylènediène (EPDM), un copolymère d'éthylène et d'acétate de vinyle (EVA), un copolymère d'éthylène et d'acrylate de méthyle (EMA), un copolymère d'éthylène et d'acrylate d'éthyle (EEA), un copolymère d'éthylène et d'acrylate de butyle (EBA), un copolymère d'éthylène et d'octène, un polymère à base d'éthylène, un polymère à base de polypropylène, un polyéther imide, un polyuréthane thermoplastique, un polyester, un polyamide, un polymère halogéné, ou un quelconque mélange de ces composés.

Selon une autre particularité de l'invention, la composition est dotée par ailleurs d'au moins une charge ignifugeante associée.

De manière particulièrement avantageuse, chaque charge ignifugeante associée est choisie parmi les composés contenant du phosphore tels que les phosphates organiques ou inorganiques, les composés contenant de l'antimoine tels que l'oxyde d'antimoine, les hydroxydes métalliques tels que l'hydroxyde d'aluminium et l'hydroxyde de magnésium, les composés à base de bore tels que les borates, les carbonates des métaux alcalins des groupes IA et IIA comme les carbonates de calcium, sodium, potassium ou magnésium et les hydroxycarbonates correspondants, les composés à base d'étain tels que stannates et hydroxystannates, la mélamine et ses dérivés tels que les mélamines phosphates, les résines formophénoliques, les phyllosilicates tels que la sépiolite, l'attapulgite, la montmorillonite, l'illite, la chlorite, la kaolinite, les micas ou les talcs.

De préférence, la composition comporte entre 1 et 80% en masse de charge ignifugeante associée.

Selon une autre particularité de l'invention, la composition est en outre pourvue d'au moins un additif choisi parmi le groupe des lubrifiants, des plastifiants, des stabilisants thermiques, des pigments, des antioxydants, et des stabilisants ultraviolets.

L'invention concerne également tout câble d'énergie et/ou de télécommunication comportant au moins une gaine isolante réalisée à partir d'une composition résistante au feu telle que précédemment décrite. Il est à noter bien entendu que chaque gaine isolante en question peut par ailleurs avoir une fonction de protection et/ou de bourrage.

L'invention est en outre relative à tout câble d'énergie et/ou de télécommunication doté d'au moins une gaine de protection réalisée à partir d'une composition résistante au feu telle que précédemment décrite. On observe ici que chaque gaine de protection peut par ailleurs avoir une fonction isolante et/ou de bourrage.

L'invention s'intéresse enfin à tout câble d'énergie et/ou de télécommunication pourvu d'au moins une couche de bourrage réalisée à partir d'une composition résistante au feu telle que précédemment décrite. Il faut remarquer que chaque couche de matériau de bourrage peut par ailleurs avoir une fonction isolante et/ou de protection.

Il est important de préciser que si de tels câbles sont destinés au transport d'énergie et/ou à la transmission de données, ils peuvent être indifféremment électriques et/ou optique, suivant que les éléments conducteurs dont ils sont pourvus sont de type électriques et/ou optiques.

D'autres caractéristiques et avantages de la présente invention apparaîtront au cours de la description de l'exemple comparatif qui va suivre, ledit exemple étant donné à titre illustratif et nullement limitatif.

### Exemple comparatif

Cinq échantillons de matériaux sont préparés à partir de cinq compositions différentes, en vue de comparer leurs performances respectives en terme de tenue au feu. On précise que les compositions en question sont toutes à même d'être utilisées pour réaliser des matériaux isolants et/ou de gainage et/ou de bourrage pour des câbles d'énergie et/ou de télécommunication.

Quoi qu'il en soit, le polymère est commun au cinq échantillons. Il s'agit en l'occurrence d'un copolymère d'éthylène et d'acétate de vinyle (EVA). Seule la nature et la composition du mélange de charges ignifugeantes varient d'un échantillon à l'autre. Le tableau 1 détaille ces différences.

**Tableau 1**

| Echantillons | 1 | 2 | 3 | 4 | 5 |
|---|---|---|---|---|---|
| EVA 28 | 40% | 40% | 40% | 40% | 40% |
| Hydroxyde de Magnésium | 60% | 50% | 50% | 50% | 50% |
| Montmorillonit e traitée | - | 10% | - | 5% | 5% |
| Oxyde d'aluminium d50 = 13nm | - | - | 10% | 5% | - |
| Oxyde d'aluminium d50 = 0.5µm | - | - | - | - | 5% |

### Mode opératoire

Les compositions sont préparées en mélangeant chaque charge ignifugeante avec une quantité toujours identique de polymère, ceci bien entendu afin de ne pas fausser les analyses comparatives ultérieures ; le taux de charge du composite résultant restant constant.

Quelle que soit la nature précise de la composition préparée, les étapes de mélange de la matrice polymère avec la charge ignifugeante sont toujours les mêmes:
- Consigne de température fixée à 160°C pendant toute la durée du mélange,
- introduction du polymère dans le mélangeur interne réglé à 30 tours par minute (tr/min),
- fusion du polymère synthétique à 160°C pendant 2 minutes à 30 tr/min,
- fusion à 60 tr/min pendant 2 minutes,
- introduction des charges à 30 tr/min,
- mélange à 30 tr/min pendant environ 10 minutes.

### Préparation des échantillons

L'échantillon 1 de référence est préparé concrètement en mélangeant 100g de copolymère d'éthylène et d'acétate de vinyle (EVA) contenant 28% d'acétate de vinyle, produit commercialisé sous la marque Evatane 28-03 par la société Arkema, avec 150g d'hydroxyde de magnésium Magnifin H10, commercialisé par la société Albemarle. Cette opération s'effectue bien entendu conformément au mode opératoire précédemment décrit. Cet échantillon 1 illustre un premier système classique permettant une bonne tenue au feu du matériau.

Il en est de même pour la préparation de l'échantillon 2 de référence, avec dans ce cas précis un mélange réalisé à partir de 100g de copolymère d'éthylène et d'acétate de vinyle (EVA) contenant 28% d'acétate de vinyle, de 125g d'hydroxyde de magnésium Magnifin H10, et de 25g de montmorillonite traitée par un alkyle d'ammonium, commercialisé sous le nom de Nanofil par la société Süd Chemie. Cet échantillon 2 se rapporte à un second système bien connu de l'état de l'art, qui est notamment décrit dans le document de brevet EP 1 033 724.

L'échantillon 3 provient du mélange de 100g de copolymère d'éthylène et d'acétate de vinyle (EVA) contenant 28% d'acétate de vinyle, de 125g d'hydroxyde de magnésium Magnifin H10, et de 25g d'oxyde d'aluminium d'un diamètre moyen d50=13nm, commercialisé sous le nom de Aeroxide Alu C par la société Degussa. Cet échantillon 3 permet d'évaluer les performances de tenue au feu d'un matériau contenant un ignifugeant classique, l'hydroxyde de magnésium, et un oxyde d'aluminium composé de particules de très faible taille.

Les échantillons 4 et 5 proviennent quant à eux du mélange de 100g de copolymère d'éthylène et d'acétate de vinyle (EVA) contenant 28% d'acétate de vinyle, de 125g d'hydroxyde de magnésium Magnifin H10, de 12.5g de montmorillonite traitée par un alkyle d'ammonium, et de respectivement 12.5g d'oxyde d'aluminium d'un diamètre moyen d50=13nm, et 12.5g d'oxyde d'aluminium d'un diamètre moyen d50=0,5µm, commercialisé sous le nom de Nabalox N0713-10 par la société Nabaltec.

### Tenue au feu

Le comportement au feu est systématiquement évalué par épiradiateur selon la norme NF-P-92-505. Les matériaux correspondants doivent pour cela être façonnés en plaques carrées de 7cm de côté et de 3mm d'épaisseur. Cette opération est réalisée en utilisant une presse hydraulique chauffante, conformément à la procédure suivante:
- Fusion à 150°C pendant 3 minutes,
- mise sous pression à 150 bar pendant 2 minutes, toujours à 150°C,
- refroidissement à l'eau sous 150 bar pendant 5 minutes.

Le tableau 2 résume les performances au feu obtenues à l'épiradiateur. Chaque test est d'une durée de 5 minutes pendant lesquelles on évalue le temps d'inflammation qui doit être le plus long possible, ainsi que le temps moyen d'auto combustion qui doit quant à lui être le plus court possible.

**Tableau 2**

| Echantillons | Temps d'inflammation (s) | Temps d'auto combustion moyen (s) |
|---|---|---|
| 1 | 110 | 8.9 |
| 2 | 120 | 7.7 |
| 3 | 131 | 8.2 |
| 4 | 161 | 6.2 |
| 5 | 136 | 7.3 |

On remarque tout d'abord que l'échantillon 2 de référence est plus performant que l'échantillon 1 de référence. Le temps d'inflammation est allongé de 10 secondes et le temps d'auto combustion est raccourci de plus d'une seconde.

L'échantillon 3 peut être comparé à l'échantillon 2 car ils contiennent tous les deux la même charge ignifugeante classique à un taux identique, associée à une autre charge destinée à améliorer les performances de tenue au feu. On observe que le temps d'inflammation de l'échantillon 3 est augmenté de plus de 11 secondes par rapport à l'échantillon 2. L'utilisation de l'oxyde d'aluminium submicronique permet donc une forte amélioration du temps d'inflammation sans affecter significativement le temps d'auto combustion.

L'association de l'oxyde d'aluminium submicronique, avec la montmorillonite traitée et l'hydroxyde de magnésium, permet d'atteindre des performances encore améliorées. Les échantillons 4 et 5 montrent que le temps d'inflammation peut être allongé de 5 jusqu'à 30 secondes, tout en réduisant significativement le temps d'auto combustion, par rapport aux échantillons 2 et 3.

## Revendications

1. Composition résistante au feu notamment pour un matériau de câble d'énergie et/ou de télécommunication, **caractérisée en ce qu'**elle comporte un polymère ainsi que de l'oxyde d'aluminium Al₂O₃ sous forme de particules dont le diamètre moyen est inférieur au micromètre.

2. Composition selon la revendication 1, **caractérisée en ce que** les particules d'oxyde d'aluminium présentent un diamètre moyen inférieur à 20 nanomètres.

3. Composition selon l'une des revendications 1 ou 2, **caractérisée en ce qu'**elle comporte entre 1 et 80% en masse d'oxyde d'aluminium, et de préférence entre 2 et 20%.

4. Composition selon l'une quelconque des revendications 1 à 3, **caractérisée en ce que** le polymère est choisi parmi un polyéthylène, un polypropylène, un copolymère d'éthylène et de propylène (EPR), un terpolymère-éthylène-propylène-diène (EPDM), un copolymère d'éthylène et d'acétate de vinyle (EVA), un copolymère d'éthylène et d'acrylate de méthyle (EMA), un copolymère d'éthylène et d'acrylate d'éthyle (EEA), un copolymère d'éthylène et d'acrylate de butyle (EBA), un copolymère d'éthylène et d'octène, un polymère à base d'éthylène, un polymère à base de polypropylène, un polyéther imide, un polyuréthane thermoplastique, un polyester, un polyamide, un polymère halogéné, ou un quelconque mélange de ces composés.

5. Composition selon l'une quelconque des revendications 1 à 4, **caractérisée en ce qu'**elle comporte au moins une charge ignifugeante associée.

6. Composition selon la revendication 5, **caractérisée en ce que** chaque charge ignifugeante associée est choisie parmi les composés contenant du phosphore tels que les phosphates organiques ou inorganiques, les composés contenant de l'antimoine tels que l'oxyde d'antimoine, les hydroxydes métalliques tels que l'hydroxyde d'aluminium et l'hydroxyde de magnésium, les composés à base de bore tels que les borates, les carbonates des métaux alcalins des groupes IA et IIA comme les carbonates de calcium, sodium, potassium ou magnésium et les hydroxycarbonates correspondants, les composés à base d'étain tels que stannates et hydroxystannates, la mélamine et ses dérivés tels que les mélamines phosphates, les résines formophénoliques, les phyllosilicates tels que la sépiolite, l'attapulgite, la montmorillonite, l'illite, la chlorite, la kaolinite, les micas ou les talcs.

7. Composition selon l'une des revendications 5 ou 6, **caractérisée en ce qu'**elle comporte entre 1 et 80% en masse de charge ignifugeante associée.

8. Composition selon l'une quelconque des revendications 1 à 7, **caractérisée en ce qu'**elle comporte au moins un additif choisi parmi le groupe des lubrifiants, des plastifiants, des stabilisants thermiques, des pigments, des antioxydants, et des stabilisants ultraviolets.

9. Câble d'énergie et/ou de télécommunication, **caractérisé en ce qu'**il comporte au moins une gaine isolante réalisée à partir d'une composition résistante au feu selon l'une quelconque des revendications précédentes.

10. Câble d'énergie et/ou de télécommunication, **caractérisé en ce qu'**il comporte au moins une gaine de protection réalisée à partir d'une composition résistante au feu selon l'une quelconque des revendications 1 à 8.

11. Câble d'énergie et/ou de télécommunication, **caractérisé en ce qu'**il comporte au moins une couche de bourrage réalisée à partir d'une composition résistante au feu selon l'une quelconque des revendications 1 à 8.

## Claims

1. A fire-resistant composition notably for power and/or telecommunications cable material, **characterized in that** it includes a polymer as well as aluminium oxide Al₂O₃ as particles, the average diameter of which is less than one micrometer.

2. The composition according to claim 1, **characterized in that** the aluminium oxide particles have an average diameter less than 20 nanometers.

3. The composition according to any of claims 1 or 2, **characterized in that** it includes between 1 and 80% by mass of aluminium oxide and preferably between 2 and 20%.

4. The composition according to any of claims 1 to 3, **characterized in that** the polymer is selected from a polyethylene, a polypropylene, an ethylene and propylene copolymer (EPR), an ethylene/propylene/diene terpolymer (EPDM), an ethylene and vinyl acetate copolymer (EVA), an ethylene and methyl acrylate copolymer (EMA), and ethylene and ethyl acrylate copolymer (EEA), an ethylene and butyl acrylate copolymer (EBA), an ethylene and octene copolymer, an ethylene-based polymer, a polypropylene-based polymer, a polyetherimide, a thermoplastic polyurethane, a polyester, a polyamide, a halogenated polymer, or any mixture of these compounds.

5. The composition according to any of claims 1 to 4, **characterized in that** it includes at least one associated flame-retardant filler.

6. The composition according to claim 5, **characterized in that** each associated flame-retardant filler is selected from compounds containing phosphorus such as organic or inorganic phosphates, compounds containing antimony such as antimony oxide, metal hydroxides such as aluminium hydroxide and magnesium hydroxide, compounds based on boron such as borates, carbonates of alkali metals of the IA and IIA groups such as calcium, sodium, potassium or magnesium carbonates and the corresponding hydroxycarbonates, compounds based on tin such as stannates and hydroxystannates, melamine and its derivatives such as melamine phosphates, formophenol resins, phyllosilicates, such as sepiolite, attapulgite, montmorillonite, illite, chlorite, kaolinite, micas or talcs.

7. The composition according to any claims 5 or 6, **characterized in that** it includes between 1 and 80% by mass of associated flame-retardant filler.

8. The composition according to any of claims 1 to 7, **characterized in that** it includes at least one additive selected from the group of lubricants, plastifiers, thermal stabilizers, pigments, antioxidants, and ultraviolet stabilizers.

9. A power and/or telecommunications cable, **characterized in that** it includes at least one insulating sheath made from one fire-resistant composition according to any of the preceding claims.

10. A power and/or telecommunications cable, **characterized in that** it includes at least one protective sheath made from one fire-resistant composition according to any of claims 1 to 8.

11. A power and/or telecommunications cable, **characterized in that** it includes at least one filler layer made from a fire-resistant composition according to any of claims 1 to 8.

## Patentansprüche

1. Feuerfeste Zusammensetzung, vor allem für einen Werkstoff eines Energie- und/oder Telekommunikationskabels, **dadurch gekennzeichnet, dass** sie ein Polymer sowie Aluminiumoxid Al₂O₃ in Form von Partikeln umfasst, deren durchschnittlicher Durchmesser kleiner als ein Mikrometer ist.

2. Zusammensetzung nach Anspruch 1, **dadurch gekennzeichnet, dass** die Aluminiumoxidpartikel einen durchschnittlichen Durchmesser von weniger als 20 Nanometer aufweisen.

3. Zusammensetzung nach einem der Ansprüche 1 oder 2, **dadurch gekennzeichnet, dass** sie zwischen 1 und 80 Massenprozent Aluminiumoxid und vorzugsweise zwischen 2 und 20 % umfasst.

4. Zusammensetzung nach einem der Ansprüche 1 bis 3, **dadurch gekennzeichnet, dass** das Polymer aus einem Polyethylen, einem Polypropylen, einem Propylen-Ethylen-Copolymer (EPR), einem Ethylen-Propylen-Dien-Terpolymer (EPDM), einem Vinylacetat-Ethylen-Copolymer (EVA), einem Methylacrylat-Ethylen-Copolymer (EMA), einem Ethylacrylat-Ethylen-Copolymer (EEA), einem Butyacrylat-Ethylen-Copolymer (EBA), einem Okten-Ethylen-Copolymer, einem Polymer auf der Basis von Ethylen, einem Polymer auf der Basis von Polypropylen, einem Polyetherimid, einem thermoplastischen Polyurethan, einem Polyester, einem Polyamid, einem halogenierten Polymer oder einem beliebigen Gemisch dieser Verbindungen ausgewählt ist.

5. Zusammensetzung nach einem der Ansprüche 1 bis 4, **dadurch gekennzeichnet, dass** sie mindestens eine verbundene flammwidrige Charge umfasst.

6. Zusammensetzung nach Anspruch 5, **dadurch gekennzeichnet, dass** die verbundene flammwidrige Charge aus den Verbindungen ausgewählt ist, die Phosphor enthalten, wie die organischen oder anorganischen Phosphate, den Verbindungen, die Antimon enthalten, wie Antimonoxid, den Metallhydroxiden, wie Aluminiumhydroxid und Magnesiumhydroxid, den Verbindungen auf der Basis von Bor, wie die Borate, den Carbonaten der Alkalimetalle der Gruppen IA und IIA, wie die Karbonate von Kalzium, Natrium, Kalium oder Magnesium und die entsprechenden Hydroxicarbonate, den Verbindungen auf der Basis von Zink, wie die Stannate und Hydroxostannate, dem Melamin und seinen Derivaten, wie die Phosphatmelamine, den Phenol-Formaldehydharzen, den Phyllosilikaten, wie Sepiolith, Attapulgit, Montmorillonit, Illit, Chlorit, Kaolinit, den Mikas oder den Talken.

7. Zusammensetzung nach einem der Ansprüche 5 oder 6, **dadurch gekennzeichnet, dass** sie zwischen 1 und 80 Massenprozent verbundene flammwidrige Charge umfasst.

8. Zusammensetzung nach einem der Ansprüche 1 bis 7, **dadurch gekennzeichnet, dass** sie mindestens ein Additiv umfasst, das aus der Gruppe der Schmiermittel, der Weichmacher, der thermischen Stabilisatoren, der Pigmente, der Antioxidationsmittel und der Ultraviolett-Stabilisatoren ausgewählt ist.

9. Energie- und/oder Telekommunikationskabel, **dadurch gekennzeichnet, dass** es mindestens eine isolierende Umhüllung umfasst, die aus einer feuerfesten Zusammensetzung nach einem der vorangehenden Ansprüche hergestellt ist.

10. Energie- und/oder Telekommunikationskabel, **dadurch gekennzeichnet, dass** es mindestens eine Schutzumhüllung umfasst, die aus einer feuerfesten Zusammensetzung nach einem der Ansprüche 1 bis 8 hergestellt ist.

11. Energie- und/oder Telekommunikationskabel, **dadurch gekennzeichnet, dass** es mindestens eine Füllschicht umfasst, die aus einer feuerfesten Zusammensetzung nach einem der Ansprüche 1 bis 8 hergestellt ist.
